# EUROPÄISCHE PATENTSCHRIFT

(11) **EP 2 699 791 B1**
(45) Veröffentlichungstag und Bekanntmachung des Hinweises auf die Patenterteilung: **31.05.2017**
(21) Anmeldenummer: 11801606.2
(22) Anmeldetag: 15.12.2011
(51) Int. Cl.: F02M 61/18, F02B 23/06

(54) **BRENNKRAFTMASCHINE**
INTERNAL COMBUSTION ENGINE
MOTEUR À COMBUSTION INTERNE

(30) Priorität: 19.04.2011 DE 102011017479
(43) Veröffentlichungstag der Anmeldung: 26.02.2014
(73) Patentinhaber: Daimler AG, 70327 Stuttgart (DE)
(72) Erfinder: ZÖLLER, Herbert, 70378 Stuttgart (DE); KOCH, Thomas, 76327 Pfinztal-Berghausen (DE); LAMPARTER, Bernd, 73230 Kirchkeim/Teck-Nabern (DE); KRAUSER, Christian, 71332 Waiblingen (DE)
(74) Vertreter: JENSEN & SON
(86) Internationale Anmeldenummer: PCT/EP2011/006335
(87) Internationale Veröffentlichungsnummer: WO 2012/143032

(56) Entgegenhaltungen:
- EP-A1- 1 469 193
- EP-A1- 2 025 919
- JP-A- 5 071 348
- US-A1- 2004 237 929

## Beschreibung

Die vorliegende Erfindung betrifft eine Brennkraftmaschine, vorzugsweise für ein Kraftfahrzeug, mit den Merkmalen des Oberbegriffs des Anspruchs 1. Die Erfindung betrifft außerdem einen Injektor und einen Kolben für eine derartige Brennkraftmaschine sowie ein Verfahren zum Betreiben einer derartigen Brennkraftmaschine.

Aus der EP 1 676 997 A1 ist eine Brennkraftmaschine bekannt, die zumindest einen Zylinder aufweist, der einen Brennraum umschließt und in dem ein Kolben hubverstellbar angeordnet ist. Ferner ist dem Zylinder ein Injektor zugeordnet, der koaxial zu einer Längsmittelachse des Zylinders angeordnet ist und zum Einspritzen von Kraftstoff in den Brennraum dient. Der dabei verwendete Injektor weist mehrere Einspritzöffnungen auf, durch welche der Kraftstoff beim jeweiligen Einspritzvorgang aus dem Injektor austritt und in den Brennraum eintritt. Dabei besitzt der jeweilige Injektor in einer quer zu seiner Längsmittelachse verlaufenden ersten Öffnungsebene eine erste Öffnungsreihe mit mehreren ersten Einspritzöffnungen und in einer quer zu seiner Längsmittelachse verlaufenden zweiten Öffnungsebene eine zweite Öffnungsreihe mit mehreren zweiten Einspritzöffnungen.

Bei der bekannten Brennkraftmaschine sind die beiden Öffnungsebenen axial voneinander beabstandet, wobei die zweite Öffnungsreihe näher an einer dem Kolben zugewandten Injektorspitze angeordnet ist. Die ersten Einspritzöffnungen und die zweiten Einspritzöffnungen erzeugen unterschiedlich orientierte Einspritzstrahlen, die zu unterschiedlichen Strahlkegeln führen. Der mit Hilfe der ersten Einspritzöffnungen erzeugte erste Strahlkegel besitzt dabei einen kleineren Strahlkegelwinkel als der mit Hilfe der zweiten Einspritzöffnungen erzeugte Strahlkegel. Hierdurch sind bei der bekannten Brennkraftmaschine die ersten und zweiten Einspritzöffnungen hinsichtlich Anzahl, Positionierung und Ausrichtung so aufeinander abgestimmt, dass die ersten Einspritzstrahlen der ersten Einspritzöffnungen zwangsläufig mit den zweiten Einspritzstrahlen der zweiten Einspritzöffnungen kollidieren, sofern durch beide Öffnungsreihen gleichzeitig eine Einspritzung durchgeführt wird. Die kollidierenden Einspritzstrahlen bilden einen gemeinsamen Strahlkegel, der zu einer gemeinsamen Flammenfront im Brennraum führt.

Aus der DE 102 45 789 A1 ist eine weitere Brennkraftmaschine bekannt, bei welcher der Injektor in einer zylinderkopfseitigen Mulde angeordnet ist, die im jeweiligen Zylinder den Brennraum gegenüber dem Kolben begrenzt. In dieser Mulde kann eine Ablenkgeometrie ausgebildet sein, um einen auftreffenden Einspritzstrahl abzulenken.

Aus der JP 5 071348 A ist noch eine weitere Brennkraftmaschine gemäß dem Oberbegriff Anspruchs 1 bekannt.

Die vorliegende Erfindung beschäftigt sich mit dem Problem, für eine Brennkraftmaschine der eingangs genannten Art bzw. für ein zugehöriges Betriebsverfahren bzw. für einen zugehörigen Injektor bzw. für einen zugehörigen Kolben eine verbesserte Ausführungsform anzugeben, die sich insbesondere durch einen erhöhten Wirkungsgrad für die Brennkraftmaschine auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Einspritzöffnungen der ersten Öffnungsreihe und der zweiten Öffnungsreihe hinsichtlich ihrer Anzahl und/oder Position und/oder Ausrichtung so zueinander anzuordnen, dass im Falle einer gleichzeitigen Kraftstoffeinspritzung durch die ersten Einspritzöffnungen und die zweiten Einspritzöffnungen erste Einspritzstrahlen der ersten Einspritzöffnungen im Wesentlichen ohne Berührung mit zweiten Einspritzstrahlen der zweiten Einspritzöffnungen bis zum Kolben gelangen. Hierdurch ist es möglich, dass im Brennraum ausgehend von den separaten Einspritzstrahlen bzw. ausgehend von den separaten Strahlkegeln entsprechende separate Flammenfronten entstehen. Diese Flammenfronten können sich im Brennraum räumlich ausbreiten und sich dabei insbesondere auch aufeinander zu bewegen. Da somit mehrere Flammenfronten gleichzeitig im Brennraum existieren, kann die im Brennraum enthaltene Luft besser ausgenutzt werden, um insgesamt mehr Kraftstoff umsetzen zu können. Da durch die getrennten Einspritzstrahlen und die getrennten Flammenfronten kritische Kraftstoffkonzentrationen im Brennraum weitgehend vermieden werden können, steht jeder Flammenfront ausreichend Sauerstoff zur Verfügung, um eine schadstoffarme, insbesondere rußarme, Verbrennung zu erzielen. Besonders zweckmäßig sind dabei eine Abstimmung der Einspritzöffnungen zur Erzielung der separaten Einspritzstrahlen einerseits und weiterer Einspritzparameter, wie z. B. Einspritzmenge und Einspritzdruck, andererseits so gewählt, dass die sich von den separaten Einspritzstrahlen ausbreitenden Flammenfronten im Brennraum im Wesentlichen nicht berühren bzw. kollidieren. Das bedeutet, dass zu dem Zeitpunkt, zu dem die sich aufeinander zu ausbreitenden Flammenfronten der beiden Strahlkegel aufeinander treffen würden, der jeweils eingespritzte Kraftstoff möglichst vollständig umgesetzt ist und die jeweilige Flamme erloschen ist. Somit ist gewährleistet, dass möglichst viel Sauerstoff für eine schadstoffarme, vorzugsweise rußarme Umsetzung vorliegt. Insgesamt kann somit mehr Kraftstoff pro Zeiteinheit bzw. pro °KW (Grad Kurbelwinkel) umgesetzt werden, was den Wirkungsgrad der Brennkraftmaschine erhöht.

Entsprechend einer vorteilhaften Ausführungsform ist eine Längsmittelachse des Injektors im Wesentlichen koaxial zu einer Längsmittelachse des Zylinders angeordnet ist.

Der Injektor besitzt zum Steuern der Einspritzöffnungen der beiden Öffnungsebenen vorzugsweise eine gemeinsame Düsennadel, sodass sämtliche Einspritzöffnungen simultan gesteuert werden. In diesem Fall erfolgt die Einspritzung immer durch sämtliche Einspritzöffnungen, also sowohl durch die ersten Einspritzöffnungen als auch durch die zweiten Einspritzöffnungen. Alternativ dazu kann der Injektor auch zwei Düsennadeln besitzen, die insbesondere koaxial ineinander angeordnet sind. Hierdurch können die Einspritzöffnungen der beiden Öffnungsreihen separat angesteuert werden, sodass bspw. eine Einspritzung durchführbar ist, bei welcher der Kraftstoff ausschließlich durch die ersten Einspritzöffnungen in den Brennraum eingespritzt wird. Zusätzlich ist dann auch eine Einspritzung durchführbar, bei welcher der Kraftstoff sowohl durch die ersten Einspritzöffnungen als auch durch die zweiten Einspritzöffnungen in den Brennraum eingespritzt wird. Grundsätzlich ist auch eine Ausführungsform denkbar, bei welcher eine weitere Einspritzung realisierbar ist, die eine Einspritzung von Kraftstoff ausschließlich durch die zweiten Einspritzöffnungen ermöglicht.

Entsprechend einer vorteilhaften Ausführungsform kann die erste Öffnungsreihe 6 bis 12, vorzugsweise 8 bis 10, erste Einspritzöffnungen aufweisen. Die zweite Öffnungsreihe kann 3 bis 6, vorzugsweise 4 bis 5, zweite Einspritzöffnungen aufweisen.

Besonders vorteilhaft ist hierbei eine Ausführungsform, bei welcher die ersten Einspritzöffnungen zum Erzeugen eines ersten Strahlkegels ausgestaltet sind, dessen erster Strahlkegelwinkel größer ist als ein zweiter Strahlkegelwinkel eines zweiten Strahlkegels, der mit Hilfe der zweiten Einspritzöffnungen erzeugt werden kann. Insbesondere kann dabei der erste Strahlkegelwinkel wenigstens 50% größer sein als der zweite Strahlkegelwinkel. Zweckmäßig können die ersten Einspritzöffnungen so ausgestaltet bzw. ausgerichtet sein, dass ihre Einspritzstrahlen einen Strahlkegel erzeugen, der einen ersten Strahlkegelwinkel von 142° bis 160°, vorzugsweise von 146° bis 156°, insbesondere von etwa 150°, aufweist. Für die zweiten Einspritzöffnungen kann vorgesehen sein, dass diese so ausgestaltet bzw. ausgerichtet sind, dass ihre Einspritzstrahlen einen zweiten Strahlkegel erzeugen, der einen zweiten Strahlkegelwinkel von 50° bis 120°, vorzugsweise von 60° bis 106°, insbesondere von 60° bis 90°, aufweist.

Entsprechend einer anderen Ausführungsform können die beiden Öffnungsebenen axial voneinander beabstandet sein, wobei die zweite Öffnungsebene näher an einer dem Kolben zugewandten Injektorspitze angeordnet ist als die erste Öffnungsebene.

Gemäß einer anderen vorteilhaften Ausführungsform kann eine Frischluftzuführung der Brennkraftmaschine zum jeweiligen Zylinder so ausgestaltet sein, dass die Frischluftbeladung des Brennraums mit einem Drall, also mit einer Rotation um die Längsmittelachse des Zylinders, beaufschlagt ist. Bei einer derartigen Drallströmung im Brennraum sind die die ersten Einspritzöffnungen und die zweiten Einspritzöffnungen der beiden Öffnungsebenen längs der Längsmittelachse des Injektors übereinander angeordnet.

Entsprechend einer weiteren Ausführungsform können die zweiten Einspritzöffnungen so ausgestaltet sein, dass sie einen zweiten Strahlaufbruch aufweisen, der größer ist als ein erster Strahlaufbruch der ersten Einspritzöffnungen. Der Strahlaufbruch ist dabei im Wesentlichen bestimmt durch den jeweiligen Öffnungsdurchmesser sowie durch die Konnizität der jeweiligen Einspritzöffnungen und durch die gewählte Verrundung der jeweiligen Einspritzöffnungen einlassseitig und/oder auslassseitig. Erfindungsgemäß ist der jeweilige Kolben an seiner dem jeweiligen Brennraum zugewandten Seite eine Kolbenmulde aufweisen, die eine Muldenkontur besitzt, die für die zweiten Einspritzstrahlen eine Ablenkgeometrie aufweist, welche die zweiten Einspritzstrahlen in Richtung zu den ersten Einspritzstrahlen ablenkt. Hierdurch kann eine homogene Ausbreitung des Kraftstoffs und der Verbrennungsreaktion im Brennraum unterstützt werden. Erfindungsgemäß ist der jeweilige Kolben an seiner dem jeweiligen Brennraum zugewandten Seite eine Kolbenmulde aufweisen, die eine Muldenkontur besitzt, die für die ersten Einspritzstrahlen eine Strahlteilergeometrie aufweist, welche die ersten Einspritzstrahlen in erste und zweite Teilstrahlen teilt, wobei die ersten Teilstrahlen in einen den zweiten Einspritzstrahlen zugewandten Bereich abgelenkt werden, während die zweiten Teilstrahlen in einen von den zweiten Einspritzstrahlen abgewandten Bereich abgelenkt werden. Diese Ausführungsform unterstützt eine möglichst homogene Verteilung des Kraftstoffs im Brennraum bzw. eine möglichst gleichmäßige Verteilung der Verbrennungsreaktion. Erfindungsgemäß ist die Muldenkontur eine weitere Ablenkkontur aufweisen, welche die ersten Teilstrahlen in Richtung zu den ersten Einspritzstrahlen ablenkt. Auch dies trägt zu einer homogenisierten Kraftstoffverteilung bzw. des Verbrennungsprozesses bei.

Die Erfindung betrifft ferner ein Verfahren zum Betreiben einer direkt einspritzenden, selbst zündenden Brennkraftmaschine (Ottomotor oder Dieselmotor) gemäß Anspruch 1, wobei die ersten Einspritzstrahlen in den jeweiligen Brennraum in Richtung Kolben eindringen und im Brennraum eine erste Flammenfront erzeugen, wobei gleichzeitig zu den ersten Einspritzstrahlen zweite Einspritzstrahlen in den jeweiligen Brennraum in den Kolben eindringen und im Brennraum eine zweite Flammenfront erzeugen. Die ersten Einspritzstrahlen und die zweiten Einspritzstrahlen sind nun so zueinander angeordnet, dass sie im Wesentlichen ohne Berührung zum Kolben gelangen. Erreicht wird dies insbesondere dadurch, dass bereits die Einspritzstrahlen nicht miteinander kollidieren. Insbesondere erzeugen die Einspritzstrahlen Strahlkegel, die zueinander koaxial bzw. konzentrisch angeordnet sind und verschiedene Kegelwinkel besitzen.

Vorzugsweise erfolgt die Einspritzung des Kraftstoffs im Bereich des oberen Totpunkts des Kolbens.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen verwendbar sind, ohne den in den Ansprüchen definierten Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Schnittdarstellung einer Brennkraftmaschine im Bereich eines Zylinders,
- Fig. 2: eine stark vereinfachte Schnittansicht eines Injektors im Bereich von Einspritzöffnungen.

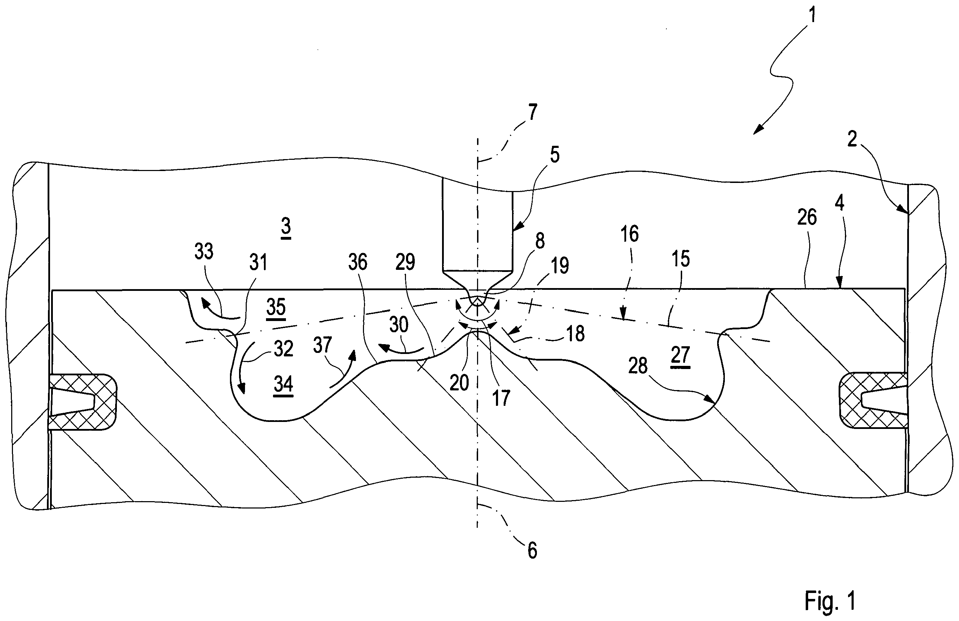

Entsprechend Fig. 1 weist eine Brennkraftmaschine 1, die insbesondere in einem Kraftfahrzeug zur Anwendung kommt, zumindest einen Zylinder 2 auf, der einen Brennraum 3 umschließt und in dem ein Kolben 4 hubverstellbar angeordnet ist. Dem jeweiligen Zylinder 2 ist ein Injektor 5 zugeordnet, mit dessen Hilfe Kraftstoff in den Brennraum 3 eingespritzt werden kann. Der Injektor 5 ist dabei im Wesentlichen koaxial zu einer Längsmittelachse 6 des Zylinders 2 angeordnet, sodass eine Längsmittelachse 7 des Injektors 5 mit der Längsmittelachse 6 des Zylinders 2 zusammenfällt.

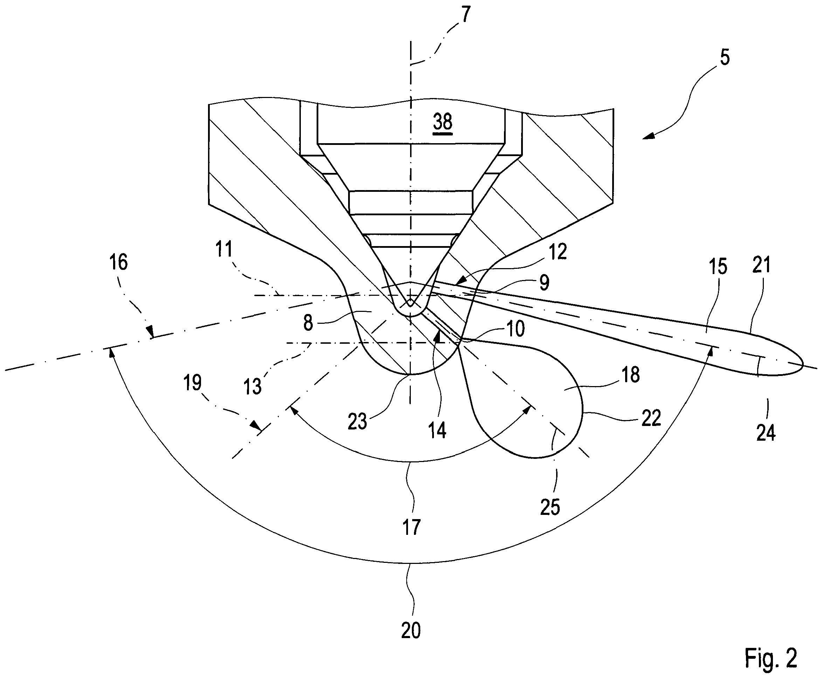

Gemäß Fig. 2 weist der jeweilige Injektor 5 in seinem dem Kolben 4 zugewandten Endbereich 8 mehrere Einspritzöffnungen 9,10 auf, durch welche der Kraftstoff während eines Einspritzvorgangs aus dem Injektor 5 austritt und in den Brennraum 3 eintritt.

Der Injektor 5 weist hierzu eine erste Öffnungsebene 11 auf, die sich quer zur Längsmittelachse 7 des Injektors 5 erstreckt und in der eine erste Öffnungsreihe 12 liegt, welche durch mehrere erste Einspritzöffnungen 9 gebildet ist, die in der Umfangsrichtung entlang des Endbereichs 8 des Injektors 5 verteilt angeordnet sind. Ferner weist der Injektor 5 eine zweite Öffnungsebene 13 auf, die sich ebenfalls quer zur Längsmittelachse 7 des Injektors 5 erstreckt und in der eine zweite Öffnungsreihe 14 liegt, die durch mehrere zweite Einspritzöffnungen 10 gebildet ist, die hierzu in der Umfangsrichtung im Endbereich 8 des Injektors 5 verteilt angeordnet sind.

Der Injektor 5 besitzt zum Steuern der Einspritzöffnungen 9, 10 der beiden Öffnungsebenen 11, 13 vorzugsweise eine gemeinsame Düsennadel 38, sodass sämtliche Einspritzöffnungen 9, 10 simultan gesteuert werden. In diesem Fall erfolgt die Einspritzung immer durch sämtliche Einspritzöffnungen 9, 10, also sowohl durch die ersten Einspritzöffnungen 9 als auch durch die zweiten Einspritzöffnungen 10. Alternativ dazu kann der Injektor 5 auch zwei nicht dargestellte Düsennadeln besitzen, die insbesondere koaxial ineinander angeordnet sind. Hierdurch können die Einspritzöffnungen 9, 10 der beiden Öffnungsreihen separat angesteuert werden, sodass bspw. eine Einspritzung durchführbar ist, bei welcher der Kraftstoff ausschließlich durch die ersten Einspritzöffnungen 9 in den Brennraum 3 eingespritzt wird. Zusätzlich ist dann auch eine Einspritzung durchführbar, bei welcher der Kraftstoff sowohl durch die ersten Einspritzöffnungen 9 als auch durch die zweiten Einspritzöffnungen 10 in den Brennraum 3 eingespritzt wird. Grundsätzlich ist auch eine Ausführungsform denkbar, bei welcher eine weitere Einspritzung realisierbar ist, die eine Einspritzung von Kraftstoff ausschließlich durch die zweiten Einspritzöffnungen 10 ermöglicht.

Während eines Einspritzvorgangs erzeugen die ersten Einspritzöffnungen 9 erste Einspritzstrahlen 15, die einen ersten Strahlkegel 16 erzeugen, der einen ersten Strahlkegelwinkel 17 besitzt. Im Unterschied dazu erzeugen die zweiten Einspritzöffnungen 10 zweite Einspritzstrahlen 18, die einen zweiten Strahlkegel 19 bilden, der einen zweiten Strahlkegelwinkel 20 besitzt. Dabei sind die ersten Einspritzöffnungen 9 und die zweiten Einspritzöffnungen 10 hinsichtlich ihrer Anzahl und/oder hinsichtlich ihrer Position am Injektor 5 und/oder hinsichtlich ihrer Ausrichtung so zueinander angeordnet, dass die ersten Einspritzstrahlen 15 und die zweiten Einspritzstrahlen 18 im Wesentlichen ohne gegenseitige Berührung bis zum Kolben 4 gelangen. Insbesondere bei einer selbstzündenden Brennkraftmaschine 1, also vorzugsweise bei einem Dieselmotor, können sich im Falle der Selbstzündung während des Einspritzvorgangs erste Flammenfronten 21 von den ersten Einspritzstrahlen 15 ausbreiten, während sich zweite Flammenfronten 22 von den zweiten Einspritzstrahlen 18 ausbreiten. Die Auslegung und Orientierung der Einspritzstrahlen 15,18 ist in Verbindung mit anderen Einspritzparametern, wie z. B. Einspritzmenge und Einspritzdruck, so abgestimmt, dass sich die von den Einspritzstrahlen 15,18 ausgehenden Flammenfronten 21,22 im Wesentlichen nicht berühren oder möglichst spät treffen. Hierdurch wird erreicht, dass für die Umsetzung des eingespritzten Kraftstoffs stets ausreichend Sauerstoff zur Verfügung steht, sodass eine möglichst schadstoffarme und vorzugsweise rußarme Verbrennung realisierbar ist.

Zweckmäßig besitzt der Injektor 5 sechs bis zwölf erste Einspritzöffnungen 9. Bevorzugt werden acht bis zehn erste Einspritzöffnungen 9. Ferner weist der Injektor 5 zweckmäßig drei bis sechs zweite Einspritzöffnungen 10 auf. Bevorzugt werden vier bis fünf zweite Einspritzöffnungen 10.

Die Einspritzöffnungen 9,10 sind am Injektor 5 zweckmäßig so angebracht bzw. ausgerichtet, dass der erste Strahlkegelwinkel 17 des ersten Strahlkegels 16 größer ist als der zweite Strahlkegelwinkel 20 des zweiten Strahlkegels 19. Insbesondere ist der erste Strahlkegelwinkel 17 wenigstens 50% größer als der zweite Strahlkegelwinkel 20. Bspw. kann der erste Strahlkegelwinkel 17 in einem Bereich von 142° bis 160° liegen. Bevorzugt ist ein Winkelbereich von 146° bis 156°. Besonders zweckmäßig ist ein erster Strahlkegelwinkel 17 von etwa 150°. Für den zweiten Strahlkegelwinkel 20 wird ein Winkelbereich von 50° bis 120° bevorzugt. Insbesondere kann der Winkelbereich von 60° bis 105° oder gemäß einer besonders vorteilhaften Ausführungsform von 60° bis 90° reichen.

Bei den hier gezeigten Ausführungsformen sind die beiden Öffnungsebenen 11,13 axial voneinander beabstandet, derart, dass die zweite Öffnungsebene 13 näher an einer dem Kolben 4 zugewandten Injektorspitze 23 angeordnet ist als die erste Öffnungsebene 11. Für den Fall, dass eine hier nicht gezeigte Frischiuftzuführung der Brennkraftmaschine 1 so ausgestaltet ist, dass sie die Frischluftbeladung des Brennraums 3 mit einem um die Längsmittelachse 6 des Zylinders 2 rotierenden Drall beaufschlagen kann, kann der Injektor 5 so ausgestaltet werden, dass die ersten Einspritzöffnungen 9 und die zweiten Einspritzöffnungen 10 längs zur Längsmittelachse 7 des Injektors 5 übereinander angeordnet sind. Vorteilhafterweise werden die Einspritzstrahlen 15,18, die in unterschiedlichen Strahlkegelwinkeln 17,20 aus den jeweiligen Einspritzöffnungen in den Brennraum 3 eintreten und damit im unterschiedliche Maß vom Drall eine Ablenkung in Richtung des Dralls erfahren, versetzt zueinander in Richtung des Kolbens 4 abgelenkt, so dass im Wesentlichen keine Berührung zwischen den Einspritzstrahlen 15,18 der jeweiligen Einspritzöffnungen 9,10 der axial voneinander beabstandeten Öffnungsebenen 11,13 sich im Brennraum 3 ausbreiten, wodurch auch sich aus den Einspritzstrahlen 15,18 bildende Flammfronten 21,22 einander wenig oder gar nicht berühren. Entsprechend können die Einspritzöffnungen 9,10 der axial voneinander beabstandeten Öffnungsebenen 11,13 bei einer Konfiguration ohne Drall oder ohne wesentlichen Drall längs zur Längsmittelachse 7 des Injektors 5 versetzt zueinander angeordnet werden. Es ist auch denkbar in einer nicht dargestellten Konfiguration ohne Drall die Öffnungsebenen 11,13 zusammenfallen zu lassen, so dass alle Einspritzöffnungen 9,10 in einer einzigen Öffnungsebene angeordnet sind und die ersten Einspritzöffnungen 9 und die zweiten Einspritzöffnungen 10 sich abwechselnd in Umfangsrichtung der gemeinsamen Öffnungsebene angeordnet sind.

Der jeweilige, aus seinem zugehörigen Einspritzöffnung 9,10 austretende Einspritzstrahl 15,18 weitet sich mit zunehmendem Abstand vom jeweiligen Einspritzöffnungen 9,10 quer zu seiner Strahllängsmittelachse 24 für den jeweiligen ersten Einspritzstrahl 15 bzw. Strahllängsmittelachse 25 für den jeweiligen zweiten Einspritzstrahl 18 aus. Diese Ausbreitung des jeweiligen Einspritzstrahls 15,18 quer zu seiner Strahllängsachse 24,25 wird auch als Strahlaufbruch bezeichnet. Dieser Strahlaufbruch hängt einerseits vom Einspritzdruck ab und wird andererseits geometrisch durch den jeweiligen Öffnungsdurchmesser sowie durch die jeweilige Konnizität der jeweiligen Einspritzöffnung 9,10 sowie durch eine eingangsseitige und/oder ausgangsseitige Verrundung der jeweiligen Einspritzöffnung 9,10 bestimmt. Zweckmäßig sind die ersten Einspritzöffnungen 9 und die zweiten Einspritzöffnungen 10 geometrisch unterschiedlich gestaltet, derart, dass die zweiten Einspritzöffnungen 10 zweite Einspritzstrahlen 18 erzeugen, die einen zweiten Strahlaufbruch besitzen, der größer ist als ein erster Strahlaufbruch, den die mit Hilfe der ersten Einspritzöffnungen 9 erzeugten ersten Einspritzstrahlen 15 besitzen. Ein größerer Strahlaufbruch bedeutet, dass die Ausbreitung des Kraftstoffs quer zur Längsmittelachse 24,25 des jeweiligen Einspritzstrahls 15,18 stärker ausgeprägt ist. Dementsprechend besitzt gemäß Fig. 2 der jeweilige erste Einspritzstrahl 15 die Form einer vergleichsweise langen, jedoch dünnen Keule, während der zweite Einspritzstrahl 18 die Form einer vergleichsweise kurzen, jedoch dicken Keule besitzt. Vorteilhafterweise besitzt der erste Einspritzstrahl 15 mit seinem geringen ersten Strahlaufbruch einen höheren Impuls als der zweite Einspritzstrahl 18 mit seinem höheren zweiten Strahlaufbruch, so dass der erste Einspritzstrahl 15 noch als Strahlenkeule auf den Kolben auftreffen kann, wodurch der erste Einspritzstrahl 15 entsprechend am Kolben 4 abgelenkt werden kann und im Brennraum 3 verteilt werden kann.

Gemäß Fig. 1 besitzt der Kolben 4 an seiner dem Brennraum 3 zugewandten Seite 26 eine Kolbenmulde 27, die eine Muldenkontur 28 aufweist. Diese Muldenkontur 28 kann für die ersten Einspritzstrahlen 18 eine Ablenkgeometrie 29 aufweisen, die so geformt ist, dass sie die zweiten Einspritzstrahlen 18 in Richtung zu den ersten Einspritzstrahlen 15 ablenkt. Ein auf diese Art abgelenkter zweiter Einspritzstrahl 18 ist in Fig. 1 durch einen Pfeil 30 angedeutet. Im Beispiel weist die Muldenkontur 28 außerdem für die ersten Einspritzstrahlen 15 eine Strahlteilergeometrie 31 auf, die so ausgestaltet ist, dass sie den jeweiligen ersten Einspritzstrahl 15 in zwei Teilstrahlen teilt. In Fig. 1 sind ein erster Teilstrahl 32 und ein zweiter Teilstrahl 33 durch Pfeile angedeutet. Die ersten Teilstrahlen 32 werden dabei in einen den zweiten Einspritzstrahlen 18 zugewandten Bereich 34 abgelenkt, während die zweiten Teilstrahlen 33 in einen von den zweiten Einspritzstrahlen 18 abgewandten Bereich 35 abgelenkt werden. Der eine Bereich 34 befindet sich bzgl. des ersten Strahlkegels 16 auf einer den zweiten Einspritzstrahlen 18 zugewandten Innenseite, während sich der andere Bereich 35 bzgl. des ersten Strahlkegels 16 auf einer von den zweiten Einspritzstrahlen 18 abgewandten Außenseite befindet.

Im Beispiel der Fig. 1 umfasst die Muldenkontur 28 eine weitere Ablenkkontur 36, die so konzipiert ist, dass sie die ersten Teilstrahlen 32 in Richtung zu den ersten Einspritzstrahlen 15 ablenkt. In Fig. 1 ist ein auf diese Weise abgelenkter erster Teilstrahl durch einen Pfeil 37 angedeutet.

Erkennbar erfolgt die Einspritzung des Kraftstoffes zweckmäßig zu einem Zeitpunkt, zu dem der Kolben 4 sich dabei im Bereich seines oberen Totpunkts befindet. Die Muldenkontur 28 ist zweckmäßig rotationssymmetrisch zur Längsmittelachse 6 des Zylinders 2 gestaltet.

## Patentansprüche

1. Brennkraftmaschine, vorzugsweise für ein Kraftfahrzeug,
- mit mindestens einem Zylinder (2), der einen Brennraum (3) umschließt und in dem ein Kolben (4) hubverstellbar angeordnet ist,
- mit mindestens einem Injektor (5) je Zylinder (2) zum Einspritzen von Kraftstoff in den Brennraum (3), wobei der jeweilige Injektor (5) mehrere Einspritzöffnungen (9,10) aufweist, durch welche der Kraftstoff beim jeweiligen Einspritzvorgang aus dem Injektor (5) austritt und in den Brennraum (3) eintritt,
- wobei der jeweilige Injektor (5) in einer quer zu seiner Längsmittelachse (7) verlaufenden ersten Öffnungsebene (11) eine erste Öffnungsreihe (12) mit mehreren ersten Einspritzöffnungen (9) und in einer quer zu seiner Längsmittelachse (7) verlaufenden zweiten Öffnungsebene (13) eine zweite Öffnungsreihe (14) mit mehreren zweiten Einspritzöffnungen (10) aufweist, **dadurch gekennzeichnet, dass**
die ersten Einspritzöffnungen (9) und die zweiten Einspritzöffnungen (10) so zueinander angeordnet sind, dass während eines Einspritzvorgangs erste Einspritzstrahlen (15) der ersten Einspritzöffnungen (9) im Wesentlichen ohne Berührung mit zweiten Einspritzstrahlen (18) der zweiten Einspritzöffnungen (10) bis zum Kolben (4) gelangen und der jeweilige Kolben (4) an seiner dem jeweiligen Brennraum (3) zugewandten Seite (26) eine Kolbenmulde (27) aufweist, die eine Muldenkontur (28) besitzt, die für die zweiten Einspritzstrahlen (18) eine Ablenkgeometrie (29) aufweist, welche die zweiten Einspritzstrahlen (18) in Richtung zu den ersten Einspritzstrahlen (15) ablenkt und die Muldenkontur (28) für die ersten Einspritzstrahlen (15) eine Strahlteilergeometrie (31) aufweist, welche die ersten Einspritzstrahlen (15) in erste Teilstrahlen (32) und zweite Teilstrahlen (33) teilt, wobei die ersten Teilstrahlen (32) in einen den zweiten Einspritzstrahlen (18) zugewandten Bereich (34) und die zweiten Teilstrahlen (33) in einen von den zweiten Einspritzstrahlen (18) abgewandten Bereich (35) abgelenkt werden und die Muldenkontur (28) eine weitere Ablenkkontur (36) aufweist, welche die ersten Teilstrahlen (32) in Richtung zu den ersten Einspritzstrahlen (15) ablenkt.

2. Brennkraftmaschine nach Anspruch 1,
**dadurch gekennzeichnet, dass**
die Längsmittelachse (7) des Injektors (5) im Wesentlichen koaxial zu einer Längsmittelachse (6) des Zylinders (2) angeordnet ist.

3. Brennkraftmaschine nach Anspruch 1 oder 2,
**dadurch gekennzeichnet,**
- **dass** die erste Öffnungsreihe (12) 6 bis 12, vorzugsweise 8 bis 10, erste Einspritzöffnungen (9) aufweist, und/oder
- **dass** die zweite Öffnungsreihe (14) 3 bis 6, vorzugsweise 4 bis 5, zweite Einspritzöffnungen (10) aufweist, und/oder
- **dass** die ersten Einspritzöffnungen (9) einen ersten Strahlkegel (16) erzeugen, dessen erster Strahlkegelwinkel (17) größer ist, insbesondere mindestens 50% größer ist, als ein zweiter Strahlkegelwinkel (20) eines durch die zweiten Einspritzöffnungen (10) erzeugten zweiten Strahlkegels (19), und/oder
- **dass** die ersten Einspritzöffnungen (9) einen ersten Strahlkegelwinkel (17) von 142° bis 160°, vorzugsweise von 146° bis 156°, insbesondere von etwa 150°, erzeugen, und/oder
- **dass** die zweiten Einspritzöffnungen (10) einen zweiten Strahlkegelwinkel (20) von 50° bis 120°, vorzugsweise von 60° bis 105°, insbesondere von 60° bis 90° erzeugen.

4. Brennkraftmaschine nach einem der Ansprüche 1 bis 3,
**dadurch gekennzeichnet, dass**
die beiden Öffnungsebenen (11,13) axial voneinander beabstandet sind, wobei die zweite Öffnungsebene (13) näher an einer dem Kolben (4) zugewandten Injektorspitze (23) angeordnet ist als die erste Öffnungsebene (11).

5. Brennkraftmaschine nach Anspruch 4,
**dadurch gekennzeichnet,**
- **dass** eine Frischluftzuführung der Brennkraftmaschine (1) zum jeweiligen Zylinder (2) so ausgestaltet ist, dass die Frischluftbeladung des Brennraums (3) mit einem Drall beaufschlagt ist,
- **dass** die ersten Einspritzöffnungen (9) und die zweiten Einspritzöffnungen (10) der beiden Öffnungsebenen (11,13) längs der Längsmittelachse (7) des Injektors (5) übereinander angeordnet sind.

6. Brennkraftmaschine nach einem der Ansprüche 1 bis 5,
**dadurch gekennzeichnet, dass**
die ersten Einspritzöffnungen (9) einen ersten Strahlaufbruch aufweisen, der kleiner ist als ein zweiter Strahlaufbruch der zweiten Einspritzöffnungen (10).

7. Verfahren zum Betreiben einer direkt einspritzenden, selbstzündenden Brennkraftmaschine (1) nach einem der Ansprüche 1 bis 6,
- bei dem erste Einspritzstrahlen (15) in den jeweiligen Brennraum (3) in Richtung Kolben (4) eindringen und im Brennraum (3) eine erste Flammenfront (21) erzeugen,
- bei dem gleichzeitig zu den ersten Einspritzstrahlen (15) zweite Einspritzstrahlen (18) in den jeweiligen Brennraum (3) eindringen und im Brennraum (3) eine zweite Flammenfront (22) erzeugen,
- bei dem die ersten Einspritzstrahlen (15) und die zweiten Einspritzstrahlen (18) im Wesentlichen ohne Berührung zum Kolben (4) gelangen.

## Claims

1. Internal combustion engine, preferably for a motor vehicle, comprising
- at least one cylinder (2), which encloses a combustion chamber (3) and in which a piston (4) capable of stroking displacement is located,
- at least one injector (5) per cylinder (2) for injecting fuel into the combustion chamber (3), the respective injector (5) having a plurality of injection ports (9, 10), through which the fuel is discharged from the injector (5) and enters the combustion chamber (3) in the respective injection process,
- wherein the respective injector (5) comprises in a first port plane (11) extending transversely to its longitudinal central axis (7) a first row of ports (12) with a plurality of first injection ports (9) and in a second port plane (13) extending transversely to its longitudinal central axis (7) a second row of ports (14) with a plurality of second injection ports (10),
**characterised in that**
the first injection ports (9) and the second injection ports (10) are arranged relative to one another in such a way that, during an injection process, first injection jets (15) of the first injection ports (9) reach the piston (4) substantially without contact with second injection jets (18) of the second injection ports (10), and **in that** the respective piston (4) has on the side (26) facing the combustion chamber (3) a piston trough (27) with a trough contour (28) having a deflection geometry (29) for the second injection jets (18) which deflects the second injection jets (18) towards the first injection jets (15), and **in that** the trough contour (28) for the first injection jets (15) has a jet splitter geometry (31) which splits the first injection jets (15) into first sub-jets (32) and second sub-jets (33), wherein the first sub-jets (32) are deflected into a region (34) facing the second injection jets (18) and the second sub-jets (33) are deflected into a region (35) remote from the second injection jets (18), and wherein the trough contour (28) has a further deflection contour (36) which deflects the first sub-jets (32) towards the first injection jets (15).

2. Internal combustion engine according to claim 1,
**characterised in that**
the longitudinal central axis (7) of the injector (5) is arranged to be substantially coaxial with a longitudinal central axis (8) of the cylinder (2).

3. Internal combustion engine according to claim 1 or 2,
**characterised in that**
- the first row of ports (12) has 6 to 12, preferably 8 to 10, first injection ports (9), and/or
- the second row of ports (14) has 3 to 6, preferably 4 to 5, second injection ports (10), and/or
- the first injection ports (9) produce a first jet cone (16) with a first jet cone angle (17) which is greater, in particular by at least 50%, than a second jet cone angle (20) of a second jet cone (19) produced by the second injection ports (10), and/or
- the first injection ports (9) produce a first jet cone angle (17) of 142° to 160°, preferably 146° to 156° and in particular of approximately 150°, and/or
- the second injection ports (10) produce a second jet cone angle (20) of 50° to 120°, preferable 60° to 105° and in particular of 60° to 90°.

4. Internal combustion engine according to any of claims 1 to 3,
**characterised in that**
the two port planes (11, 13) are axially spaced from one another, the second port plane (13) being closer to an injector tip (23) facing the piston (4) than the first port plane (11).

5. Internal combustion engine according to claim 4,
**characterised in that**
- a feed of fresh air of the internal combustion engine (1) to the respective cylinder (2) is designed such that a swirl is applied to the fresh air charge of the combustion chamber (3).
- the first injection ports (9) and the second injection ports (10) of the two port planes (11, 13) are arranged on top of one another along the longitudinal central axis (7) of the injector (5).

6. Internal combustion engine according to any of claims 1 to 5,
**characterised in that**
the first injection ports (9) have a first jet break-up which is smaller than a second jet break-up of the second injection ports (10).

7. Method for operating a direct-injection, compression-ignition internal combustion engine (1) according to any of claims 1 to 6, wherein
- first injection jets (15) enter the respective combustion chamber (3) in the direction of the piston (4) and generate a first flame front (21) in the combustion chamber (3),
- at the same time as the first injection jets (15), second injection jets (18) enter the respective combustion chamber (3) and generate a second flame front (22) in the combustion chamber (3),
- the first injection jets (15) and the second injection jets (18) reach the piston (4) substantially without contact.

## Revendications

1. Moteur à combustion interne, de préférence pour un véhicule automobile,
- comprenant au moins un cylindre (2), qui entoure une chambre à combustion (3) et dans lequel est disposé un piston pouvant être déplacé par la course,
- comprenant au moins un injecteur (5), chaque injecteur (2) étant destiné à injecter du carburant dans la chambre de combustion (3), l'injecteur respectif (5) présentant plusieurs orifices d'injection (9, 10) à travers lesquels le carburant sortant de l'injecteur (5) lors de chaque injection est introduit dans la chambre de combustion (3),
- l'injecteur (5) respectif dans un premier plan (11) d'orifice s'étendant transversalement à son axe longitudinale (7) présentant une première rangée (12) d'orifices ayant plusieurs premiers orifices d'injection (9) et dans un second plan (13) d'orifice s'étendant transversalement à son axe longitudinal (7) une seconde rangée (14) d'orifices ayant plusieurs seconds orifices d'injection (10), **caractérisé en ce que** les premiers orifices d'injection (9) et les seconds orifices d'injection (10) sont disposés les uns par rapport aux autres de telle sorte que pendant l'injection les premiers jets d'injection (15) des premiers orifices d'injection (9) atteignent le piston (4) sensiblement sans entrer contact avec les seconds jets d'injection (18) des seconds orifices d'injection (10) et le piston (4) respectif présente sur son côté (26) se trouvant en regard de la chambre de combustion (3) respective une cuvette (27) de piston, qui possède un contour (28) de cuvette qui présente une géométrie déflectrice (29) pour les seconds jets d'injection (18), qui dévie les seconds jets d'injection (18) en direction des premiers jets d'injection (15) et le contour (28) de cuvette pour les premiers jets d'injection (15) présente une géométrie séparatrice de jet (31), qui sépare les premiers jets d'injection (15) en premiers jets partiels (32) et en seconds jets partiels (33), les premiers jets partiels (32) étant déviés dans une zone (34) se trouvant en regard des seconds jets d'injection (18) et les seconds jets partiels (33) dans une zone (35) opposée aux seconds jets d'injection (18) et le contour (28) de cuvette présente un autre contour déflecteur (36) qui dévie les premiers jets partiels (32) en direction des premiers jets d'injection (15).

2. Moteur à combustion interne selon la revendication 1, **caractérisé en ce que** l'axe central longitudinal (7) de l'injection (5) est disposé sensiblement coaxialement à l'axe central longitudinal (6) du cylindre (2).

3. Moteur à combustion interne selon la revendication 1 ou la revendication 2, **caractérisé en ce que**
- la première rangée d'orifice (12) présente 6 à 12, de préférence 8 à 10 premiers orifices d'injection (9), et/ou
- la seconde rangée d'orifices (14) présente 3 à 6, de préférence 4 à 5 seconds orifices d'injection (10), et/ou
- les premiers orifices d'injection (9) produisent un premier cône (16), dont le premier angle (17) est supérieur, en particulier au moins 50% plus grand qu'un second angle (20) d'un second cône (19) produit par les seconds orifices d'injection, et/ou
- les premiers orifices d'injection (9) produisent un premier angle (17) compris entre 142° et 160°, de préférence compris entre 146° et 156°, en particulier d'environ 150°, et/ou
- les seconds orifices d'injection (10) produisent un second angle (20) compris entre 50° et 120°, de préférence comprise entre 60° et 105°, en particulier compris entre 60° et 90°.

4. Moteur à combustion interne selon l'une quelconque des revendications 1 à 3, **caractérisé en ce que** les deux plans d'orifice (11, 13) sont éloignés axialement l'un de l'autre, le second plan d'orifice (13) étant disposé plus près sur un embout (23) d'injecteur se trouvant en regard du piston (4) que le premier plan (11) d'orifice.

5. Moteur à combustion interne selon la revendication 4, **caractérisé**
- **en ce qu'**une amenée d'air frais du moteur à combustion interne (1) vers chaque cylindre (2) est conçue de telle sorte que la charge d'air frais de la chambre de combustion (3) est soumise à l'action d'un tourbillon,
- **en ce que** les premiers orifices d'injection (9) et les seconds orifices d'injection (10) des deux plans (11, 13) d'orifice sont superposés le long de l'axe central longitudinal (7) de l'injecteur (5).

6. Moteur à combustion interne selon l'une quelconque des revendications 1 à 5, **caractérisé en ce que** les premiers orifices d'injection (9) présentent une première apparition de jet qui est inférieure à une seconde apparition de jet provenant des seconds orifices d'injection (10).

7. Procédé de fonctionnement d'un moteur à combustion interne (1) à allumage par compression, à injection directe selon l'une quelconque des revendications 1 à 6,
- selon lequel des premiers jets d'injection (15) pénètrent dans la chambre de combustion (3) respective en direction du piston (4) et produisent dans la chambre de combustion (3) un premier front de flamme (21),
- selon lequel simultanément aux premiers jets d'injection (15) des seconds jets d'injection (18) pénètrent dans la chambre de combustion (3) respective et produisent dans la chambre de combustion (3) un second front de flamme (22),
- selon lequel les premiers jets d'injection (15) et les seconds jets d'injection (18) atteignent le piston (4) sensiblement sans contact.
